# EUROPEAN PATENT APPLICATION

(11) **EP 3 395 616 A1**
(43) Date of publication of application: **31.10.2018**
(21) Application number: 16878411.4
(22) Date of filing: 09.12.2016
(51) Int. Cl.: B60R 1/04, B60R 1/10

(54) **BLIND SPOT ASSIST DEVICE**

(30) Priority: 22.12.2015 JP 2015249659
(71) Applicant: Nippon Seiki Co., Ltd., Nagaoka-shi, Niigata 940-8580 (JP)
(72) Inventor: OBATA, Masato, Niigata (JP); HARUYAMA, Kanae, Niigata (JP); TAKEBE, Minoru, Niigata (JP); HIROE, Kenichiro, Niigata (JP)
(74) Representative: Jackson, Richard Eric
(86) International application number: PCT/JP2016/086706
(87) International publication number: WO 2017/110519

(57) **Abstract**

A blind spot assist device is provided such that not only a sense of discomfort felt by a viewer is reduced when the device is disposed on a pillar, but also deterioration of appearance can be suppressed. The blind spot assist device 100 is equipped with: a case body 120 for housing one pair of parallel planar mirrors 110; and a cover member 130 for covering a constituent pillar body 51 of a front pillar 50 from the inner side of a vehicle 1, and having an opening part 130a in which the case body 120 is disposed. The cover member 130 has: a base section 131; and a raised portion 132 having curved surfaces 132a, 132b, the surfaces being raised toward the viewer side from the base section 131 and reaching from the base section 131 to surface parts of the case body 120 protruding closer to the viewer side than the base section 131 .

## Description

### TECHNICAL FIELD

The present invention relates to a blind spot assist device which projects an image of a blind spot area obstructed by a pillar in a vehicle.

### BACKGROUND ART

A blind spot assist device which projects a blind spot produced by a pillar (for example, a front pillar) in a vehicle disclosed in, for example, Patent Literature 1 is proposed. That blind spot assist device includes a pair of mirrors into which light indicating an image of a blind spot area enters, the pair of mirrors consisting of a half-transmitting mirror provided on a viewer side and reflecting a part of the light and transmitting a part of the light and a mirror reflecting the light to the half-transmitting mirror placed to face each other, and a plurality of light-blocking portions provided at the half-transmitting mirror on the viewer side and blocking light incident at a predetermined angle from the viewer side.

### CITATION LIST

### PATENT LITERATURE

Patent Literature 1: Japanese Unexamined Patent Application Publication No. 2015-120477

### SUMMARY OF THE INVENTION

### PROBLEMS TO BE SOLVED BY THE INVENTION

In an apparatus which makes an image of a blind spot to be viewed by using a pair of mirrors as described above, the apparatus will be provided of course in a pillar that produces the blind spot. As a method for placing the apparatus, it is possible to use a pillar cover (a pillar garnish) covering a cabin side of the pillar. However, a scheme for easing discomfort felt by a viewer and reducing impairment of appearance due to presence of the apparatus is required.

The present invention is made in view of the aforementioned, and an object thereof is to provide a blind spot assist device capable of easing discomfort felt by a viewer and reducing impairment of appearance if the device is placed in a pillar.

### SOLUTION TO PROBLEM

To achieve the object described above, the blind spot assist device according to the present invention is a blind spot assist device which projects an image of a blind spot area obstructed by a pillar of a vehicle, including:
a pair of mirrors into which light indicating the image enters, the pair of mirrors consisting of a half-transmitting mirror provided on a viewer side and reflecting a part of the light and transmitting a part of the light and a mirror reflecting light to the half-transmitting mirror placed to face each other;
a case body configured to house the pair of mirrors; and
a cover member configured to cover a pillar body constituting the pillar from the inside of the vehicle, and has an opening in which the case body is to be placed.

The cover member includes a base, and a raised portion raised on the viewer side from the base and having a curved surface reaching a part protruding toward the viewer side than the base on the front surface of the case body from the base.

### EFFECT OF THE INVENTION

According to the present invention, discomfort felt by a viewer can be eased and impairment of appearance can be reduced if a device is placed in a pillar.

### BRIEF DESCRIPTION OF THE DRAWINGS

FIG. 1 is a diagram illustrating a general view of a neighborhood of a driver's seat of a vehicle in which a blind spot assist device according to an embodiment of the present invention will be placed.
FIG. 2 is a schematic diagram illustrating a function of the blind spot assist device.
FIG. 3 is a perspective view illustrating a pair of parallel planar mirrors of the blind spot assist device.
FIG. 4(a) is a perspective view and FIG. 4(b) is a sectional view illustrating a case body of the blind spot assist device.
FIG. 5 is a perspective view illustrating the blind spot assist device.
FIG. 6 is a perspective view illustrating the blind spot assist device.
FIG. 7 is a perspective view illustrating the blind spot assist device.
FIG. 8 is a sectional view illustrating the blind spot assist device.

### MODE FOR CARRYING OUT THE INVENTION

A blind spot assist device according to an embodiment of the present invention will be described with reference to the drawings.

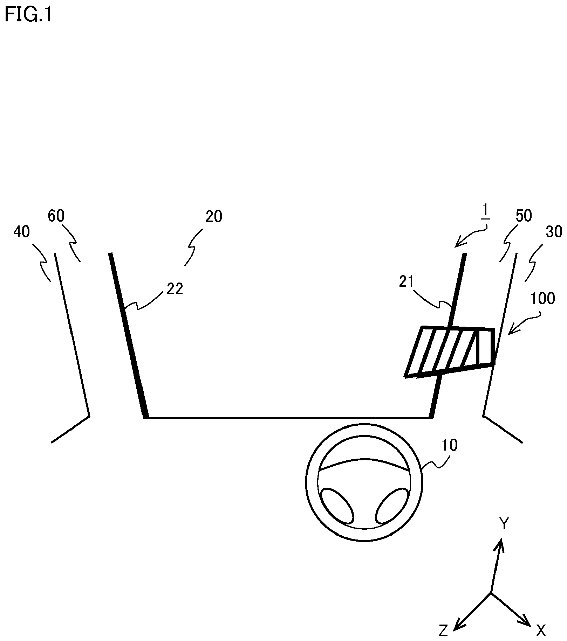

FIG. 1 is a diagram illustrating a general view of a neighborhood of a driver's seat of a vehicle 1 in which a blind spot assist device 100 according to the present embodiment will be placed. As illustrated in FIG. 1, the vehicle 1 includes a steering 10, a windshield glass 20, side glasses 30 and 40, and front pillars 50 and 60. A black ceramic (a black-colored ceramic) portions 21 and 22 are light blocking members formed by printing on the periphery of the windshield glass 20.

In the vehicle 1, a viewer seated on a seat (mainly, a driver seated on a driver's seat in which the steering 10 is placed) directly views scenery in areas in which the windshield glass 20 (except a portion in which the black ceramic portion 21 is formed) and the side glasses 30 and 40 are placed, while is not able to directly view scenery in areas in which the front pillars 50 and 60 and the black ceramic portions 21 and 22 are placed because the view of the viewer is obstructed by the front pillars 50 and 60 and the black ceramic portions 21 and 22, that is, a blind spot area is produced.

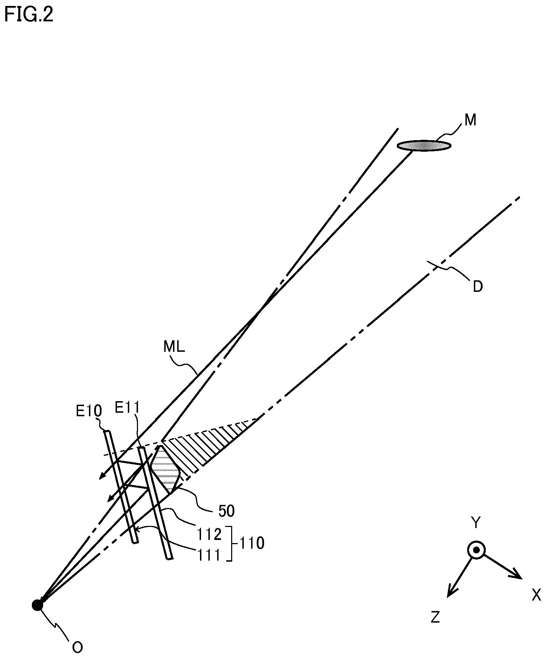

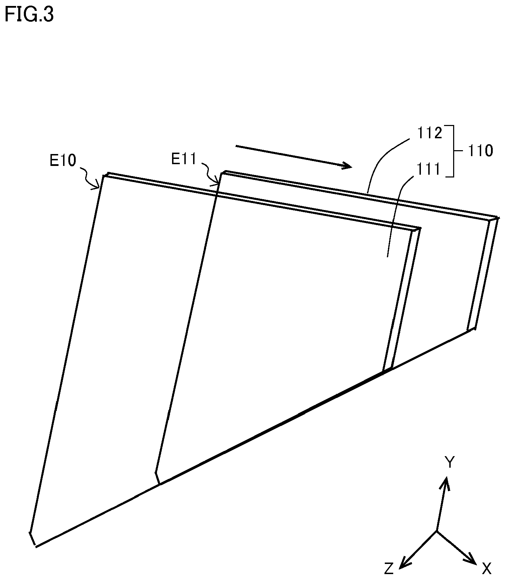

Next, a basic structure of the blind spot assist device 100 according to the present embodiment will be described with reference to FIG. 1 to FIG. 3. FIG. 2 is a schematic plan view illustrating a function of the blind spot assist device 100. FIG. 3 is a perspective view illustrating a pair of parallel planar mirrors 110.

As illustrated in FIG. 1 and FIG. 2, the blind spot assist device 100 is placed in the front pillar 50 on the right side (a driver side) when seen from a viewer seated on a seat. An image of the blind spot area obstructed by the front pillar 50 and the black ceramic portion 21 is projected on the blind spot assist device 100. The blind spot assist device 100 is placed to face the front pillar 50 and the black ceramic portion 21 when seen from the viewer.

The front pillar 50 in which the blind spot assist device 100 is to be placed has a substantially plate shape (substantially prismatic shape, substantially rectangular parallelepiped shape). For the ease of understanding of a function of each member, description will be given using an XYZ plane in which an axis along a direction in which the front pillar 50 extends is defined as a Y-axis, an axis along the normal direction of a surface of the front pillar 50 facing the vehicle 1 (a surface substantially facing the viewer) is defined as a Z-axis, and an axis orthogonally crossing the Y-axis and the Z-axis is defined as an X-axis. A direction of an arrow indicating each of the axes of X, Y and Z faces is defined as a + (positive) direction of each axis. Thus, as is understood from FIG. 1 and FIG. 2, a +Y direction indicates a direction from a bottom side to substantially a ceiling of the vehicle 1, a +Z direction indicates a direction from the front pillar 50 to substantially the viewer, and a +X direction indicates a direction from the front pillar 50 to substantially a rear side of the vehicle 1. Note that the XYZ plane is not stringent, and introduced merely for the easy understanding of a configuration of each member, such as a positional relationship.

As illustrated in FIG. 2 and FIG. 3, the blind spot assist device 100 includes a pair of parallel planar mirrors (a pair of mirrors) 110.

A pair of parallel planar mirrors 110 are constituted by a half-transmitting planar mirror (a half-transmitting mirror) 111 which reflects a part of incident light and transmits a part of incident light and a planar mirror (a mirror) 112 which are placed to be in parallel to and face each other. The half-transmitting planar mirror 111 and the planar mirror 112 are fixed in a parallel positional relationship by being housed in a case body 120. Note that a pair of mirrors of the present invention does not necessarily have to be placed to be completely parallel to each other as long as these mirrors are placed to face each other. Moreover, these mirrors may be curved mirrors instead of being planar mirrors.

The half-transmitting planar mirror 111 is placed on the viewer side, and is formed by evaporatively depositing metal like aluminum on a surface of a substrate of a translucency resin material like polyethylene terephthalate, polycarbonate, polyethylene, and acryl, whereby a reflectance adjustment layer for achieving a desired reflectance is formed on the half-transmitting planar mirror 111. The reflectance (transmissivity) is adjusted depending on a thickness, a type and the like of the reflectance adjustment layer. A ratio of quantity of light of transmitted light to reflected light in the half-transmitting planar mirror 111 of the present embodiment is 1:4 (the reflectance: 80%). The half-transmitting planar mirror 111 may be formed by coating a dielectrics multilayer film on a surface of a substrate. A light-incident-side end portion (a side on the light-incident side) E10 of the half-transmitting planar mirror 111 which is an end portion in a substantially -X direction is placed to protrude from a light-incident-side end portion (a side on the light-incident side) E11 of the planar mirror 112. The half-transmitting planar mirror 111 and the planar mirror 112 are placed at different heights in the horizontal direction.

The planar mirror 112 is placed so that a surface (a reflection surface) is parallel to a surface (a half-transmitting reflection surface) of the half-transmitting planar mirror 111 and is, for example, an aluminum deposited planar mirror formed by evaporatively depositing metal like aluminum on a surface of a substrate of the above-described translucent resin material.

Each of the half-transmitting planar mirror 111 and the planar mirror 112 is formed in a substantially wedge shape so that a width in a vertical direction of each surface (the half-transmitting reflection surface and the reflection surface) becomes gradually smaller toward a travel direction of light ML in a pair of parallel planar mirrors 110 with respect to a travel direction of the light ML of a pair of parallel planar mirrors 110 (a direction of an arrow in FIG. 3). This is to remove unnecessary parts out of the view of the viewer to reduce size and weight of the device. The half-transmitting planar mirror 111 and the planar mirror 112 are similar (including substantially similar) in a plan view. The light-incident-side end portion E10 of the half-transmitting planar mirror 111 and the light-incident-side end portion E11 of the planar mirror 112 are inclined along a glass surface of the windshield glass 20. This is because these end portions E10 and E11 can be placed in proximity to the glass surface of the windshield glass 20.

Next, with reference to FIG. 2, an operation of a pair of parallel planar mirrors 110 will be described. FIG. 2 illustrates a state in which the viewer is seated in the driver's seat, and a viewpoint O indicates a viewpoint (an eye-point) of the viewer.

In FIG. 2, a blind spot area D to be obstructed by the front pillar 50 (though not illustrated, including the black ceramic portion 21) is produced from the vehicle front view of the viewer (the viewpoint O). Therefore, the viewer is not able to directly view an object M existing in the blind spot area D from the viewpoint O.

The light ML from the object M enters a pair of parallel planar mirrors 110. First, the half-transmitting planar mirror 111 transmits a part of the light ML and reflects a part of the light ML. Then the light ML travels in substantially the +X direction while repeating reflection between a pair of parallel planar mirrors 110, and a part of the light ML exits from a pair of parallel planar mirrors 110 in substantially the +Z direction (that is, the light ML penetrates the half-transmitting planar mirror 111 or directly exits from a space between the half-transmitting planar mirror 111 and the planar mirror 112). The light which enters a pair of parallel planar mirrors 110 and repeats reflection between a pair of parallel planar mirrors 110 is light inclined with respect to a parallel plane to a pair of parallel planar mirrors 110. A part of the light ML exiting from a pair of parallel planar mirrors 110 reaches the viewpoint O. Therefore, the viewer can view an image of the object M projected on the planar mirror 112 continuous with the scenery which is directly visible through the half-transmitting planar mirror 111 from the viewpoint O, and the image of the object M is viewed as if it is transmitted through the front pillar 50. Light from a small area on the backside of the front pillar 50 in the blind spot area D (a hatched area) is not able to enter a pair of parallel planar mirrors 110 and an image of the light is not able to be projected on a pair of parallel planar mirrors 110, but, an image of the blind spot area D can be projected on a pair of parallel planar mirrors 110 in most other areas than that area.

In projecting an image of the blind spot area D by a pair of parallel planar mirrors 110, the viewer disposes the blind spot assist device 100 at an arbitrary height of the front pillar 50 (at a height adjusted to the viewpoint O) by adjusting an angle of a pair of parallel planar mirrors 110 so that an image of the blind spot area D is projected on a pair of parallel planar mirrors 110, that is, the light ML from the blind spot area D reaches the viewpoint O. Since the half-transmitting planar mirror 111 and the planar mirror 112 are fixed in a parallel positional relationship, a pair of parallel planar mirrors 110 can be placed at the same time in a single placement operation, and also, angles of a pair of parallel planar mirrors 110 can be adjusted at the same time in a single adjustment operation.

Since the light ML repeats reflection between a pair of parallel planar mirrors 110, if the light ML enters the half-transmitting planar mirror 111 n times, n pieces of the light ML indicating the image of the object M exit from the parallel planar mirror 110. That is, n pieces of the light ML indicating the image of the object M will exit from a pair of parallel planar mirrors 110 along the horizontal direction of the viewpoint O. Therefore, the viewer can view the image of the object M in a wide range in left and right directions. Brightness of the light ML exiting from a pair of parallel planar mirrors 110 decreases as the number of times of reflection on the half-transmitting planar mirror 111 increases.

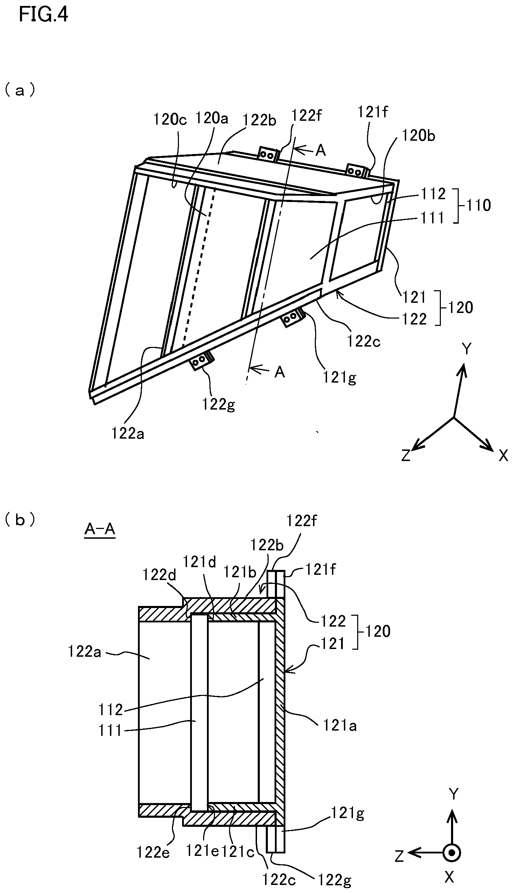

Next, an exterior structure of the blind spot assist device 100 will be described with reference to FIG. 4 to FIG. 8.

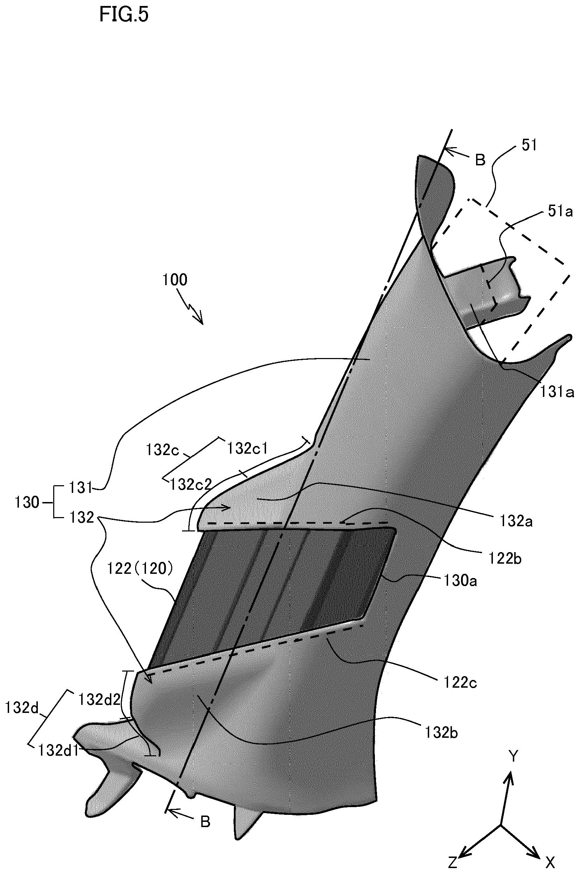

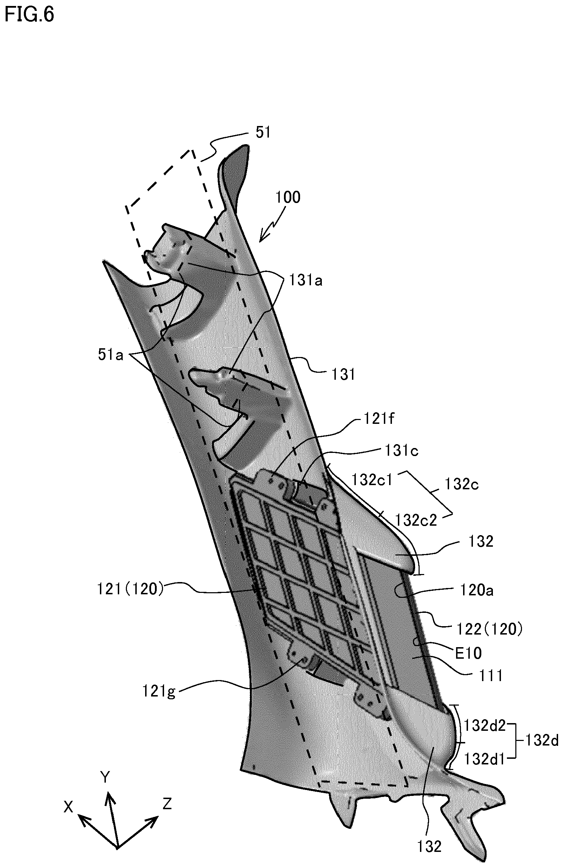

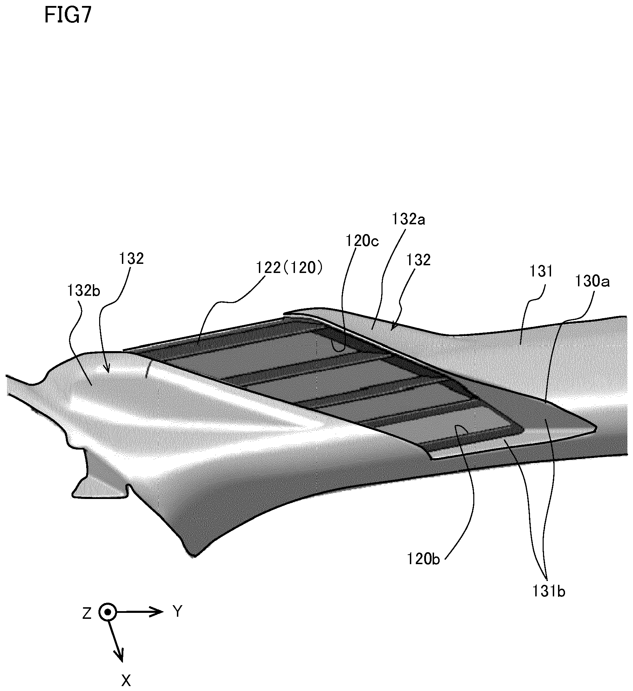

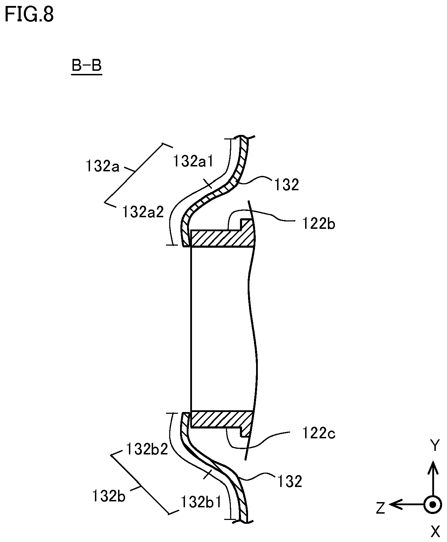

As illustrated in FIG. 4 to FIG. 8, the blind spot assist device 100 includes a pair of parallel planar mirrors 110, the case body 120, and a cover member 130. FIG. 4(a) is a perspective view illustrating the case body 120, and FIG. 4(b) is a sectional view taken through A-A of FIG. 4(a). FIG. 5 is a perspective view illustrating the blind spot assist device 100 seen from the viewpoint O of the viewer, and FIG. 6 is a perspective view illustrating the blind spot assist device 100 seen from the opposite side of the viewpoint O of the viewer (on the windshield glass 20 side). FIG. 7 is a perspective view of the blind spot assist device 100 seen from substantially the +Z direction. FIG. 8 is a sectional view taken through B-B of FIG. 5. In FIG. 4 to FIG. 8, description will be given with a near side (substantially the +Z direction) being defined as a "front" and a depth side (substantially the -Z direction) being defined as a "rear" seen from the viewer.

As illustrated in FIG. 4, the case body 120 houses a pair of parallel planar mirrors 110 and includes a rear case 121 and a front case 122.

The rear case 121 is formed of a light blocking resin material like ABS resin or polyurethane resin. The rear case 121 is a substantially U-shaped (inversed C-shaped) member when seen from a light-exit side (the substantially +X direction) in which a rear wall portion 121a, an inner top wall portion 121b, and an inner bottom wall portion 121c are integrated with one another. The planar mirror 112 is placed in the rear wall portion 121a at a position between the inner top wall portion 121b and the inner bottom wall portion 121c. The half-transmitting planar mirror 111 is placed at a release end portion 121d of the inner top wall portion 121b and a release end portion 121e of the inner bottom wall portion 121c to be parallel to the planar mirror 112. A fixing piece 121f is formed to protrude in the substantially +Y direction at an upper end of the rear wall portion 121a and a fixing piece 121g is formed to protrude in the substantially -Y direction at a bottom end of the rear wall portion 121a.

The front case 122 is formed of a light blocking resin material as in the rear case 121, and is a frame-shaped member in which a plurality of louvers 122a, an outer top wall portion 122b, and an outer bottom wall portion 122c are integrated with one another. A plurality of louvers 122a is board-shaped parts provided at predetermined intervals between the outer top wall portion 122b and the outer bottom wall portion 122c. A plurality of louvers 122a is positioned in the half-transmitting planar mirror 111 on the viewer side, and functions as a light blocking portion which blocks external light incident on a pair of parallel planar mirrors 110 at a predetermined angle from the viewer side (mainly at an incidence angle to be reflected on the half-transmitting planar mirror 111 or the planar mirror 112, and reaching the viewpoint O). A plurality of louvers 122a is placed to be inclined with their tips facing the viewer side at a predetermined angle with respect to a surface of the half-transmitting planar mirror 111 on the viewer side. The outer top wall portion 122b and the outer bottom wall portion 122c are provided to cover the exterior of the inner top wall portion 121b and the inner bottom wall portion 121c, respectively. The outer top wall portion 122b includes a step 122d which faces the release end portion 121d of the inner top wall portion 121b. The outer bottom wall portion 122c includes a step 122e which faces the release end portion 121e of the inner bottom wall portion 121c. The steps 122d and 122e are formed in positions in contact with a peripheral portion of the half-transmitting planar mirror 111 when the front case 122 is assembled to the rear case 121. A fixing piece 122f is formed to protrude in the substantially +Y direction in the outer top wall portion 122b and a fixing piece 122g is formed to protrude in the substantially -Y direction in the outer bottom wall portion 122c. The fixing pieces 122f and 122g are provided in positions overlapping with the fixing pieces 121f and 122g, and function as fixed portions to hold the case body 120 to the cover member 130 together with the fixing pieces 121f and 121g.

The case body 120 includes a first opening 120a provided on a light-incident-side side surface and through which the light ML from the blind spot area D enters, a second opening 120b provided on a light exit-side side surface and through which the light ML reflected on the planar mirror 112 exit, and a third opening 120c provided on a front surface and through which the half-transmitting planar mirror 111 is exposed. The third opening 120c is divided into a plurality of areas by the louvers 122a.

As illustrated in FIG. 5 to FIG. 8, the cover member 130 is a member formed of, for example, a light blocking resin material like polypropylene resin, and in which a base 131 and a raised portion 132 are formed integrally with each other. The cover member 130 covers, from the inside of the vehicle 1, a pillar body 51 which constitutes the front pillar 50, and includes an opening 130a in which the case body 120 housing a pair of parallel planar mirrors 110 is to be placed. An outer shape (a surface shape) of the cover member 130 is the same as an outer shape of the pillar cover (a pillar garnish) originally attached to the pillar body 51 except that the opening 130a and the raised portion 132 are formed in the outer shape of the cover member 130. For example, surface finish is provided on the cover member 130 using a material like that of the pillar cover, and is formed in a color like the color of the pillar cover.

The pillar body 51 here is exposed when the pillar cover provided in the vehicle 1 is removed from the front pillar 50. The pillar body 51 is a part of a body frame of the vehicle 1, and is formed of steel, for example. An attachment hole 51a to which the pillar cover is to be attached is formed in advance in the pillar body 51.

An outer shape of the base 131 is the same as an outer shape of the pillar cover originally attached to the pillar body 51 except that a part of the opening 130a is formed in the outer shape of the base 131. A protruding attaching portion 131a corresponding to the attachment hole 51a of the pillar body 51 is formed on the backside of the base 131 in a position other than a position in which the opening 130a is formed. The shape of the attaching portion 131a is like that of an attaching portion provided in the originally attached pillar cover. When the attaching portion 131a is inserted into the attachment hole 51a, the cover member 130 is fixed to the pillar body 51. The base 131 has a flat portion 131b extending from an edge of the opening 130a on the light-exit side (substantially +X direction) to reach a portion in which the base 131 is sunk on the backside of the base 131 of the case body 120.

The raised portion 132 is provided to rise on the viewer side from the base 131 (substantially +Z direction) and, in the present embodiment, is formed integrally with the base 131 on upper and lower sides of the opening 130a. A part of the opening 130a is formed in the raised portion 132 continuous with the base 131. The raised portion 132 includes curved surfaces 132a and 132b which reach a portion protruding closer to the viewer than the base 131 on the front side of the case body 120 as described later. The curved surfaces 132a and 132b cover an edge of the front surface of the case body 120 (front ends of the outer top wall portion 122b and the outer bottom wall portion 122c). The raised portion 132 includes a portion protruding on the light-incident side (substantially -X direction) from the base 131. An outer shape (a contour) of this protruding portion has curves 132c and 132d extending from the base 131 and reaching the light-incident-side side surface of the case body 120 when seen from the viewpoint O of the viewer (see FIG. 5) and from the side opposite to the viewpoint O relative to the cover member 130 (see FIG. 6). The curves 132c and 132d cover the edge of the light-incident-side side surface of the case body 120 (light-incident-side end portion of the outer top wall portion 122b and the outer bottom wall portion 122c).

As described above, in the present embodiment, the opening 130a of the cover member 130 is formed in the base 131 and the raised portion 132, and the case body 120 is placed in the opening 130a. A shape of the opening 130a is determined to correspond to three sides (upper and lower sides of the front surface and a side on the light-exit side) of the case body 120, and a size of the opening 130a is determined so that the third opening 120c and the second opening 120b of the case body 120 are not obstructed by the base 131 when seen from the viewpoint O of the viewer. A portion of the opening 130a corresponding to the side on the light-incident side on the front surface of the case body 120 is opened. The case body 120 is attached so that only the third opening 120c on the front surface and the second opening 120b on the light-incident-side side surface which are viewing areas in which an image of the blind spot area D is to be projected from the backside of the base 131 are exposed from the opening 130a. The case body 120 is held by the cover member 130 with the fixing pieces 121f and 122f and the fixing pieces 121g and 122g being fixed to a part 131c to which the fixing pieces are to be fixed using, for example, screws, on the back of the base 131 and the raised portion 132. The blind spot assist device 100 is placed in the front pillar 50 with the cover member 130 being fixed to the pillar body as described above. Therefore, presence of the case body 120 can be made less noticeable by covering, using the cover member 130, the portion of the case body 120 except the viewing area of the blind spot area D. The front surface of the case body 120 exposed through the opening 130a desirably has the same tone as that of the cover member 130 from the viewpoint of higher integrity as the blind spot assist device 100.

An optimal optical design of the blind spot assist device 100 according to the present embodiment has been made based on a state in which a pair of parallel planar mirrors 110 is located close to the pillar body 51. Therefore, as illustrated in FIG. 7, the case body 120 is placed to sink on the backside of the base 131 (substantially -Z direction) on the light-exit side (substantially +X direction) and protrude closer to the viewer side than the base 131 on the light-incident side. Therefore, the opening 130a is also provided to be inclined with respect to the base 131. In contrast, since the cover member 130 includes the flat portion 131b extending from the edge of the opening 130a to the backside on the light-exit side, the inside of the cover member 130 is not exposed. Moreover, since the cover member 130 includes the raised portion 132 on the light-incident side, a part protruding on the viewer side from the base 131 on the front surface of the base 131 and the case body 120 is connected to the curved surfaces 132a and 132b so that an edge portion of the case body 120 is not exposed from the cover member 130. Therefore, impression that the case body 120 is protruding on the viewer side can be softened, and discomfort felt by the viewer and impairment of appearance due to presence of the blind spot assist device 100 can be reduced. From a viewpoint of further easing discomfort felt by the viewer and reducing impairment of appearance, the curved surfaces 132a and 132b are desirably continuous smooth curved surfaces. Specifically, as illustrated in FIG. 8, the curved surfaces 132a and 132b are curved surfaces having inflection points in which concave surfaces 131a1 and 131b1 on the base 131 side curving toward the viewer side from a surface direction of the base 131 and convex surfaces 131a2 and 131b2 on the case body 120 side curving in the surface direction of the front surface of the case body 120 from the viewer side are continued. That is, the curved surfaces 132a and 132b are formed so that sectional shapes thereof taken through a longitudinal direction of the cover member 130 become substantially an S-shape or an inversed S-shape.

To make the light ML from the blind spot area D enter the blind spot assist device 100, in principle, the blind spot assist device 100 needs to be placed so that the light-incident-side end portion E10 of the half-transmitting planar mirror 111 protrudes from an outer shape of the front pillar 50 (the pillar cover originally attached to the pillar body 51) toward the light-incident side, that is, toward the windshield glass 20. Therefore, as illustrated especially in FIG. 6, the case body 120 is placed so that the first opening 120a of the light-incident-side side surface protrudes on the light-incident side from the base 131. The cover member 130 connects parts of the base 131 and the case body 120 protruding on the light-incident side than the base 131 with the curves 132c and 132d of the protruding portions on the light-incident side of the raised portion 132 so that an edge portion of the case body 120 is not exposed from the cover member 130. Therefore, impression that the case body 120 is protruding on the light-incident side can be softened, and discomfort felt by the viewer and impairment of appearance due to presence of the blind spot assist device 100 can be reduced. Moreover, the protruding portion of the raised portion 132 can increase strength of the cover member 130 as compared with a case in which no protruding portion is provided. From a viewpoint of further easing discomfort felt by the viewer and reducing impairment of appearance, the curves 132c and 132d are desirably continuous smooth curves. Specifically, the curves 132c and 132d are curves having inflection points in which concave curves 132c1 and 132d1 on the base 131 side curving toward the light-incident side from the surface direction of the base 131 and convex curves 132c2 and 132d2 on the case body 120 side curving in the surface direction of the light-incident-side side surface of the case body 120 from the light-incident side are continued. That is, the curves 132c and 132d are substantially S-shaped or inversed S-shaped.

In addition, to soften the impression of the presence of the case body 120, the blind spot assist device 100 has round portions of any size at front end portions of the louvers 122a, the edge of the second opening 120b, and the like.

The thus-configured blind spot assist device 100 is a blind spot assist device which projects an image of the blind spot area D obstructed by the front pillar 50 of the vehicle 1. The blind spot assist device 100 includes a pair of parallel planar mirrors 110 into which the light ML indicating the image enters, and consisting of the half-transmitting planar mirror 111 provided on the viewer side and reflecting a part of the light ML and transmitting a part of the light ML and, the planar mirror 112 reflecting the light ML to the half-transmitting planar mirror 111 placed to face each other;
the case body 120 configured to house a pair of parallel planar mirrors 110; and
a cover member 130 configured to cover the pillar body 51 constituting the front pillar 50 from the inside of the vehicle 1, and has the opening 130a in which the case body 120 is to be placed.

The cover member 130 includes the base 131, and the raised portion 132 raised on the viewer side from the base 131 and having the curved surfaces 132a and 132b reaching the part protruding toward the viewer side than the base 131 on the front surface of the case body 120 from the base 131.

With this configuration, impression that the case body 120 is protruding on the viewer side can be softened, and discomfort felt by the viewer and impairment of appearance can be reduced if the device is placed in the front pillar 50.

The curved surfaces 132a and 132b are concave surfaces 132a1 and 132b1 curving on the viewer side from a surface direction of the base 131 and convex surfaces 132a2 and 132b2 curving in the front surface direction of the case body 120 from the viewer side are continued.

With this configuration, the base 131 and the front surface of the case body 120 can be connected with a smooth curved surface, so that discomfort felt by the viewer can be further eased and impairment of appearance can be further reduced.

The light-incident-side side surface of the case body 120 is placed to protrude on the light-incident side from the base 131. The raised portion 132 has a part protruding on the light-incident side from the base 131. The outer shape of the protruding part has the curves 132c and 132d extending from the base 131 to reach the light-incident-side side surface of the case body 120 when seen from the viewpoint O of the viewer.

With this configuration, impression that the case body 120 is protruding on the light-incident side is softened, and discomfort felt by the viewer and impairment of appearance can be reduced if the device is installed in the front pillar 50.

The curves 132c and 132d are curves in which concave curves 132c1 and 132d1 curving on the light-incident side from the surface direction of the base 131 and convex curves 132c2 and 132d2 curving in the surface direction of the light-incident-side side surface of the case body 120 from the light-incident side are continued.

With this configuration, the base 131 and the light-incident-side side surface of the case body 120 can be connected with a smooth curve, so that discomfort felt by the viewer can be further eased and impairment of appearance can be further reduced.

Note that the present invention is not limited by the above embodiment and the drawings. The above embodiment and the drawings can be modified (including deletion of components). In the present embodiment, the raised portion 132 is formed integrally with the base 131. However, the raised portion 132 may be provided integrally with the case body 120, or may be provided separately from the base 131 and the case body 120. The opening 130a of the cover member 130 is opened at a portion corresponding to the light-incident side on the front surface of the case body 120 and is surrounding three other sides of the case body 120. However, the opening 130a may surround four sides of the case body 120, for example. The curved surfaces 132a and 132b and the curves 132c and 132d of the raised portion 132 are provided to cover the edge of the front surface or the edge of the light-incident-side side surface of the case body 120. However, the curved surfaces 132a and 132b and the curves 132c and 132d may be provided so that one end of each of them is adjacent to the edge of the front surface or the edge of the light-incident-side side surface of the case body 120 at the same height. In this case, the curved surfaces 132a and 132b and the curves 132c and 132d of the raised portion 132 may be in contact with (including formed integrally with) the front surface or the light-incident-side side surface of the case body 120, and may be placed close to the front surface or the light-incident-side side surface of the case body 120 with a small gap therebetween.

A plurality of louvers 122a of the case body 120 does not necessarily have to be formed integrally with the front case 122, but may be formed separately from the front case 122. In this case, a plurality of louvers 122a may be provided integrally with each other, or each of a plurality of louvers 122a may be provided separately from each other and assembled to the front case 122. An angle of each louver of a plurality of louvers 122a may be made, for example, manually adjustable by placing the louvers 122a in the front case 122 via a shaft, for example. In this case, if the surface of the half-transmitting planar mirror 111 is covered by the louvers 122a with all the louvers 122a being placed close to the surface of the half-transmitting planar mirror 111 and inclined, adhesion of foreign substances and dust to the half-transmitting planar mirror 111 when the device is not in use can be prevented and flaws and damage to the half-transmitting planar mirror 111 can be prevented. The front case 122 including the louvers 122a may be made of a flexible material like silicone. Therefore, the front case 122 can be attached to or removed from easily, and dirt on the half-transmitting planar mirror 111 can be removed easily with the front case 122 removed. This structure is convenient in providing variation in color and design to enable the viewer to change the front case 122 to his/her liking. Moreover, when the viewer, and the like inadvertently touches the blind spot assist device 100, the front case 122 may function as a buffer. In the present embodiment, a space between a pair of parallel planar mirrors 110 is hollow. However, a pair of parallel planar mirrors 110 may have a solid structure by, for example, filling a pair of parallel planar mirrors 110 with a transparent resin material (a translucent member), or providing a pair of parallel planar mirrors 110 on opposite surfaces of a pair of transparent substrates (translucent members). Therefore, adhesion of foreign substances and dust to inner surfaces of a pair of parallel planar mirrors 110 may be prevented.

The blind spot assist device 100 of the present embodiment is placed in the front pillar 50 on the driver side (the right side) of the vehicle 1.
However, the blind spot assist device of the present invention may be placed in the front pillar 60 on the passenger side (the left side), a center pillar, or a rear pillar as a pillar of the vehicle 1, and project an image of the blind spot area obstructed by these pillars.

### INDUSTRIAL APPLICABILITY

The present invention is suitable for a blind spot assist device which projects an image of a blind spot area obstructed by a pillar of a vehicle.

### DESCRIPTION OF THE REFERENCE NUMERALS

- 1: vehicle
- 100: blind spot assist device
- 110: a pair of parallel planar mirrors (a pair of mirrors)
- 111: half-transmitting planar mirror (half-transmitting mirror)
- 112: planar mirror (mirror)
- 120: case body
- 121: rear case
- 122: front case
- 130: cover member
- 130a: opening
- 131: base
- 132: raised portion
- 132a: curved surface
- 132b: curved surface
- 132c: curve
- 132d: curve
- O: viewpoint

## Claims

1. A blind spot assist device which projects an image of a blind spot area obstructed by a pillar of a vehicle, comprising:
a pair of mirrors into which light indicating the image enters, the pair of mirrors consisting of a half-transmitting mirror provided on a viewer side and reflecting a part of the light and transmitting a part of the light and a mirror reflecting light to the half-transmitting mirror placed to face each other;
a case body configured to house the pair of mirrors; and
a cover member configured to cover a pillar body constituting the pillar from the inside of the vehicle, and has an opening in which the case body is to be placed, wherein
the cover member includes a base, and a raised portion raised on the viewer side from the base and having a curved surface reaching a part protruding toward the viewer side than the base on the front surface of the case body from the base.

2. The blind spot assist device according to claim 1, wherein the curved surface is a curved surface in which a concave surface curving on the viewer side from a surface direction of the base and a convex surface curving in the front surface direction of the case body from the viewer side are continued.

3. The blind spot assist device according to claim 1, wherein:
a light-incident-side side surface of the case body is placed to protrude on the light-incident side from the base; and
the raised portion has a part protruding on the light-incident side from the base, and an outer shape of the protruding part has a curve extending from the base to reach the light-incident-side side surface of the case body when seen from a viewpoint of the viewer.

4. The blind spot assist device according to claim 3, wherein the curve is a curve in which a concave curve curving on the light-incident side from the surface direction of the base and a convex curve curving in the surface direction on the light-incident-side side surface of the case body from the light-incident side are continued.
